# EUROPEAN PATENT APPLICATION

(11) **EP 0 992 318 A2**
(43) Date of publication of application: **12.04.2000**
(21) Application number: 99117378.2
(22) Date of filing: 03.09.1999
(51) Int. Cl.: B23Q 7/06, B23Q 7/10, B23Q 7/14, B23Q 7/16

(54) **Device and method of feeding panels onto a cutting system**

(30) Priority: 07.09.1998 IT BO980518
(71) Applicant: SELCO SPA, 61100 Pesaro (IT)
(72) Inventor: Naldi,Valter, 40100 BOLOGNA (IT)
(74) Representative: Cerbaro, Elena, Dr.

(57) **Abstract**

A device (1) for feeding panels (4); the device (1) being characterized by featuring:
- at least one push member (9) movable in two directions (X, Y);
- means (15) for determining the height (H) of complete packs (6) and the heights (Hₐ, H_{b}) of incomplete packs (6a, 6b);
- means (18) for subtracting the height (Hₐ) from the height (H) to determine the height (H_{b}); and
- means (18, 15, 2, 9) for selecting and removing a second incomplete pack (6b), of the height (H_{b}) to be superimposed on a first incomplete pack (6a), so that the whole defined by the first incomplete pack (6a) of the height (Hₐ) and by the second incomplete pack (6b) of the height (H_{b}), one on top of the other, forms a complete pack (6) of the height (H) for supply to the cutting system.

## Description

The present invention relates to a device for feeding panels onto a cutting system, and to two methods, relative to the device, for improving, ir particular, the transfer of stacked panels from ar elevator loading platform onto a feed table.

As is known, any cutting system is equipped with at least one feed device for forming packs of panels from a stack; which packs, once formed, are fed by the feec device, and by means of conventional conveying systems, onto the cutting system, the efficiency of which is therefore directly proportional to the number of panels in each pack. The maximum number of panels that can bE cut simultaneously in one pack depends on the characteristics of the cutting system, and in particular on cutting power and the extent to which the blade projects from the work table.

The present invention provides substantially for a device designed to improve the formation of complete packs, possibly from incomplete packs forming part of different stacks.

According to the present invention, there is provided a device for feeding panels onto a cutting system; the device comprising:
(a) an elevator loading platform for lifting stacks of panels;
(b) a feed table for feeding the panels, in the form of complete packs, to the cutting system; and
(c) at least one push member for feeding complete and incomplete packs of panels from the elevator loading platform to the feed table in a horizontal direction;
   the device being characterized by comprising:
   - at least one push member movable in a vertical direction and coordinated with the movements of the elevator loading platform in the same vertical direction; the push member having a thrust point which is movable in the vertical direction by a distance at least equal to the maximum height, compatible with the cutting system, of a complete pack;
   - means for determining the height of a complete pack;
   - means for determining the height of a first incomplete pack forming part of a first stack;
   - means for subtracting the height of a first incomplete pack from the height of a complete pack, to determine the height of a second incomplete pack forming part of a second stack; and
   - means for selecting and removing a second incomplete pack to be superimposed on a first incomplete pack, so that the whole defined by the first incomplete pack and the second incomplete pack, one on top of the other, forms a complete pack for supply to the cutting system.

The present invention also relates to two methods of feeding panels onto a cutting system, as claimed in Claims 7 to 10.

A non-limiting embodiment of the present invention will be described by way of example with reference to the accompanying drawings, in which:
Figures 1-3 show schematic side views, at different stages, of the device according to the present invention;
Figure 4 shows a plan view of the Figure 1-3 device.

Device 1 according to the present invention comprises an elevator loading platform 2 for lifting complete stacks 3a, 3b of panels 4 into programmed positions with respect to a feed table 5, which also forms part of device 1 and provides for feeding complete packs 6 of panels 4 to a conventional cutting system (not shown). Obviously, when stacks 3a, 3b are lifted by elevator platform 2, the vertical positions of stacks 3a, 3b with respect to ground 7 are also varied.

Feed table 5 is defined in conventional manner by a number of rollers or wheels 8, which are normally mounted idly to respective shafts, but which may obviously also be powered, without departing from the scope of the invention.

It should be pointed out that, in the present context, the term "complete pack 6" is intended to mean a pack of panels 4 comprising the maximum number of panels 4 compatible with optimum use and with the technical characteristics of the cutting system.

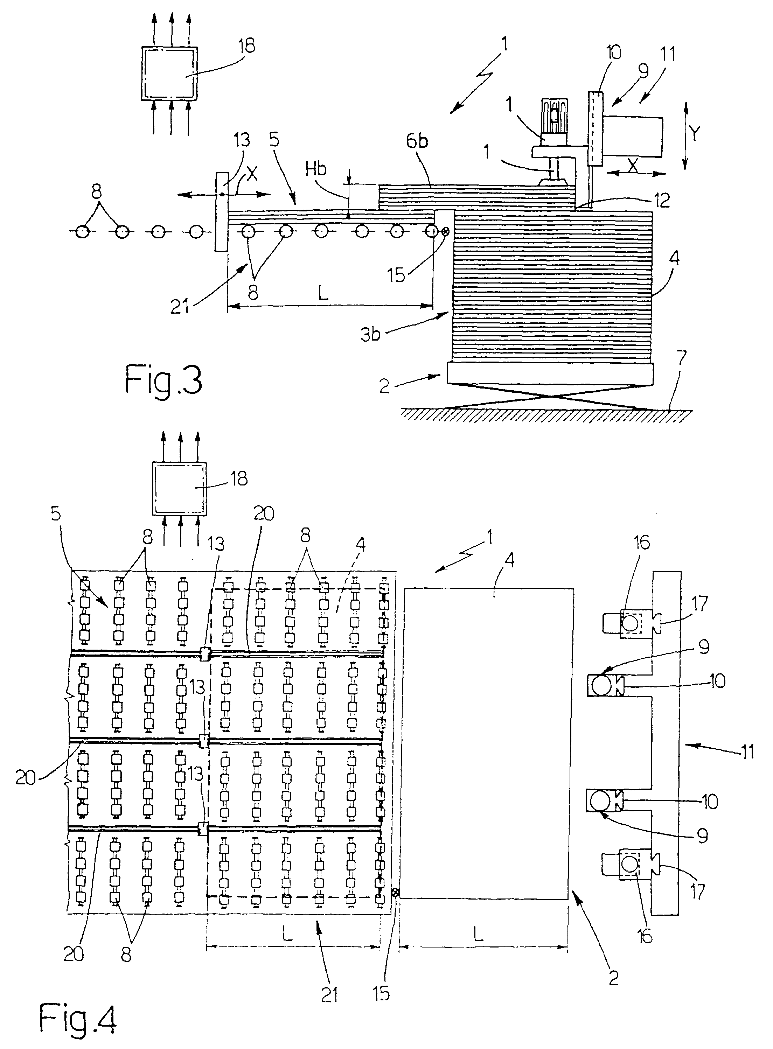

Finally, device 1 comprises at least one push member 9 movable in a horizontal direction X and a vertical direction Y. Via conventional means, push member 9 travels in direction Y along a vertical guide 10 (see also Figure 4) formed on a carriage 11, which, for the sake of clarity, is only shown completely in Figure 4.

Each push member 9 (two are shown in Figure 4) comprises a thrust point 12 which is movable in vertical direction Y by a distance at least equal to the maximum height of complete pack 6. As stated, the maximum height of complete pack 6 must be compatible with the cutting system.

Push member 9 may be equipped with a block 13 adjustable vertically in known manner by means of a motor reducer 14 with an encoder. As explained in detail later on, block 13 is only activated, at the discretion of the operator, when panels 4 for transfer are of different thickness or deformed.

A novel characteristic of the present invention therefore lies in push members 9 on carriage 11 (Figure 4) not only being movable in horizontal direction X to push complete packs 6, or incomplete packs 6a, 6b (see below), onto feed table 5, but also being movable in vertical direction Y to set respective thrust points 12 to the desired vertical positions. The vertical movement of each push member 9 in vertical direction Y is coordinated with similar movements in vertical direction Y of elevator loading platform 2; which movements of elevator loading platform 2 in vertical direction Y may be effected by means of a respective electric motor (not shown) with an encoder.

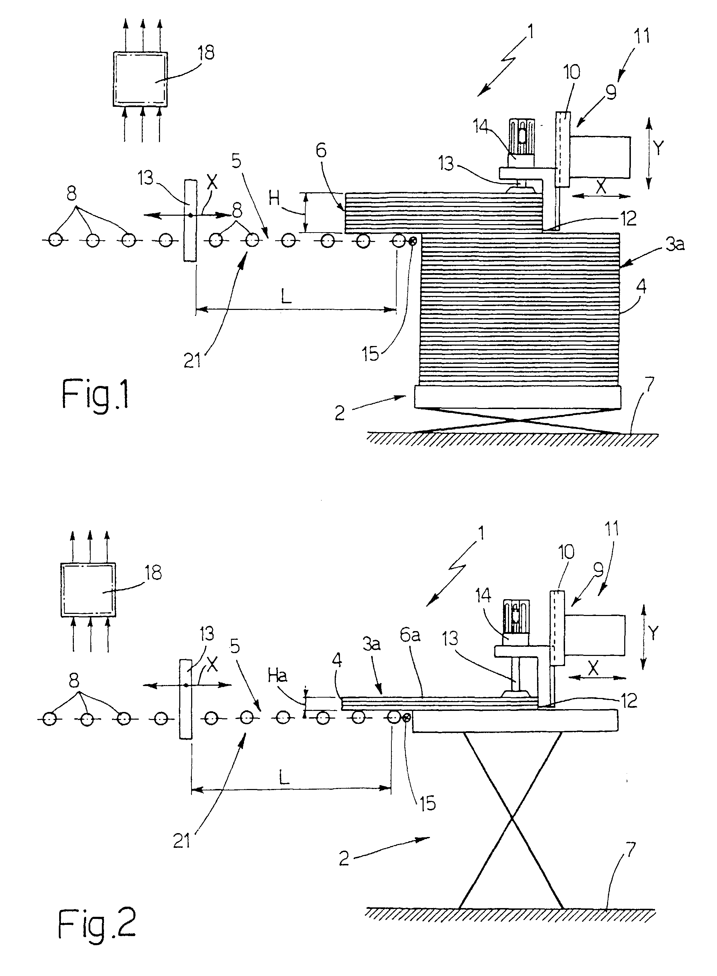

Figure 1 shows the situation in which a complete pack 6, of height H, is removed from a stack 3a just loaded onto elevator loading platform 2.

The raising of elevator loading platform 2 by an operator-selected height H with respect to feed table 5 is controlled by means of a sensor 15 on a level with feed table 5; and the encoder-equipped electric motor of platform 2 is activated by an electronic central control unit 18, which also controls the positioning of thrust point 12 of each push member 9.

In other words, both the bottom surface of the first complete pack 6 and the thrust point 12 of push member 9 are positioned substantially on a level with feed table 5.

Conversely, in the case of nonuniform panels 4, i.e. deformed or of slightly different thickness, block 13 of push member 9 may be activated by motor reducer 14. Block 13 provides for selecting the height H of first complete pack 6 on respective push member 9; at which point, each push member 9 on carriage 11 is lowered onto stack 3a so that block 13 rests on the top surface of the top panel 4 in stack 3a.

In short, device 1 provides for two different operating modes of push members 9, which are entered by the operator from a keyboard (not shown) controlling electronic central control unit 18 :
(1) The first operating mode applies to panels 4 of substantially the same thickness and with no serious deformation; in which case, electronic central control unit 18, in cooperation with the encoder-equipped electric motor of elevator platform 2, lifts the whole of elevator platform 2 by a height H; each push member 9 moves in direction Y to position respective thrust point 12 on a level with feed table 5; and carriage 11 (Figure 4) is moved forward to push push members 9 in direction X.
(2) The second operating mode applies to panels 4 differing substantially in thickness or which are seriously deformed; in which case, each block 13, activated by respective motor reducer 14, sets the same height H on respective push member 9, which is lowered immediately after so that block 13 rests on the top surface of stack 3a. This therefore ensures that, even if the thrust points 12 of different push members 9 are positioned at different heights with respect to ground 7, the same number of panels 4 will be pushed by each push member 9 when transferring complete packs 6.

Once complete pack 6 is transferred onto feed table 5, push members 9 are raised to the maximum height with respect to ground 7, and conventional grippers 16 (Figure 4), for gripping complete pack 6 and which slide along guides 17 formed on carriage 11, are lowered. The movement of carriage 11 as a whole feeds grippers 16 in direction X to feed complete packs 6 to the cutting system.

The above operations are repeated as described until all the complete packs 6 are transferred from elevator loading platform 2 onto feed table 5.

At the end of the first stack 3a, however, it is most likely an incomplete pack 6a, comprising fewer panels 4 and therefore of a height Hₐ smaller than H, will be left over.

As elevator platform 2 is raised, the height Hₐ of the first incomplete pack 6a is measured by sensor 15; the first incomplete pack 6a of stack 3a is transferred by carriage 11 in the usual way from elevator platform 2 onto feed table 5; and, at the same time, electronic central control unit 18 subtracts height Hₐ from height H of complete pack 6 to determine the height H_{b} of a second incomplete pack 6b of the next stack 3b.

At this point, the elevator loading platform raises the second stack 3b (Figure 3) in the usual way by height H_{b} with respect to the top surface of the top panel 4 of the first incomplete pack 6a. The raising of elevator platform 2 by means of the encoder-equipped motor is obviously controlled by sensor 15 in cooperation with electronic central control unit 18.

In the same way as for transferring a complete pack 6, in the case of panels 4 of substantially the same thickness and with no deformation, thrust point 12 of each push member 9 is positioned vertically by electronic central control unit 18 at a height Hₐ with respect to feed table 5.

Similarly, in the case of panels 4 of slightly different thickness or which are deformed, block 13 is used, as described previously, to select height H_{b} of second incomplete pack 6b on respective push member 9; at which point, each block 13 is brought to rest on the top surface of second stack 3b, and second incomplete pack 6b is transferred onto first incomplete pack 6a.

Once formed as described above, the complete pack 6 of height H defined by the two incomplete packs 6a, 6b is fed to the cutting system by grippers 16 fed by carriage 11 in direction X.

As shown in Figure 4, feed table 5 is equipped, in novel manner, with a number of gates 19, which, in addition to being movable in vertical direction Y, also slide along guides 20 in horizontal direction X to define on feed table 5 a portion 21 of a width L substantially equal to the width of panels 4 in stacks 3a, 3b. The width L of portion 21 obviously varies alongside a variation in the width of panels 4. The importance of this innovation is made clearer below.

The incomplete pack 6a is therefore arrested by gates 19, which in the meantime have been raised in vertical direction Y.

The presence of gates 19 is extremely useful when transferring panels 4 from elevator platform 2 to feed table 5.

In fact, if, for example, the position of gates 19 were not adjustable in direction X, i.e. if width L were fixed on the basis of the maximum width of panels 4 compatible with the cutting system, an incomplete pack 6a narrower than width L would be allowed to move freely up to and until arrested by gates 19, due to idle rollers 8 rotating freely on the respective shafts. As a result, the rear edge of first incomplete pack 6a of first stack 3a would be offset with respect to the edge of feed table 5, so that, as each push member 9 begins to push second incomplete pack 6b of stack 3b towards feed table 5, the front edge of second incomplete pack 6b may flex downwards under the weight of the component panels 4, and due to the second incomplete pack 6b by then projecting with respect to the other panels 4 in stack 3b, and, when transferring second incomplete pack 6b to feed table 5, the front edges of some or all of panels 4 in second incomplete pack 6b may be lower than the top surface of the first incomplete pack 6a of stack 3a left over from the previous cycle. In which case, as opposed to sliding smoothly over first incomplete pack 6a, some or all of panels 4 in second incomplete pack 6b would collide with first incomplete pack 6a already on portion 21 of feed table 5, with all the obvious problems this entails.

As stated previously, operation may be fully controlled by appropriately setting electronic central control unit 18, and by means of sensor 15 for determining the vertical positions of elevator platform 2 and, hence, stacks 3a, 3b.

To improve transfer of complete pack 6 and first incomplete pack 6a (Figures 1, 2) from elevator platform 2 to feed table 5, electronic central control unit 18 may be set to position the bottom surfaces of the packs and the thrust point 12 of each push member 9 slightly higher than feed table 5. Similarly, the vertical positions of the bottom surface of second incomplete pack 6b (Figure 3) and of thrust point 12 of each push member 9 may be slightly higher than the top surface of first incomplete pack 6a already transferred onto portion 21 of feed table 5, so as to reduce the risk of packs 6, 6a, 6b interfering with one another and/or with feed table 5.

The advantages of the device according to the present invention are as follows:
(1) greater flexibility as regards transfer from elevator loading platform 2 to feed table 5, due to elevator loading platform 2 and push member 9 being movable in vertical direction Y;
(2) adjustable width L of portion 21 by means of gates 19, which are also movable in horizontal direction X; and
(3) supplying the cutting system at all times with complete packs 6, while at the same time simplifying device 1 by making feed table 5 fixed in direction Y.

## Claims

1. A device (1) for feeding panels (4) onto a cutting system; the device (1) comprising:
(a) an elevator loading platform (2) for lifting stacks (3a, 3b) of panels (4);
(b) a feed table (5) for feeding said panels (4), in the form of complete packs (6), to the cutting system; and
(c) at least one push member (9) for feeding complete (6) and incomplete (6a, 6b) packs of panels (4) from said elevator loading platform (2) to said feed table (5) in a horizontal direction (X);
the device (1) being characterized by comprising:
- at least one push member (9) movable in a vertical direction (Y) and coordinated with the movements of said elevator loading platform (2) in the same vertical direction (Y); said at least one push member (9) having a thrust point (12) which is movable in said vertical direction (Y) by a distance at least equal to the maximum height, compatible with the cutting system, of a complete pack (6);
- means (15) for determining the height (H) of a complete pack (6);
- means (15) for determining the height (Hₐ) of a first incomplete pack (6a) forming part of a first stack (3a);
- means (18) for subtracting said height (Hₐ) from said height (H) of a complete pack (6), to determine the height (H_{b}) of a second incomplete pack (6b) forming part of a second stack (3b); and
- means (18, 15, 2, 9) for selecting and removing a second incomplete pack (6b), of said height (H_{b}) to be superimposed on a first incomplete pack (6a), so that the whole defined by said first incomplete pack (6a) of said height (Hₐ) and by said second incomplete pack (6b) of said height (H_{b}), one on top of the other, forms a complete pack (6), of said height (H) for supply to the cutting system.

2. A device (1) as claimed in Claim 1, wherein said means (2, 15, 18) provide for vertically positioning the bottom surface of said second incomplete pack (6b) at a height greater than that of the top surface of said first incomplete pack (6a), when said first incomplete pack (6a) is supported on said feed table (5); said feed table (5) being of fixed height in said vertical direction (Y) .

3. A device (1) as claimed in any one of the foregoing Claims, wherein said at least one push member (9) comprises means (13, 14) for selecting said heights (Hₐ, H_{b}, H) within said at least one push member (9).

4. A device (1) as claimed in any one of the foregoing Claims, wherein provision is also made for at least one gate (19) movable in both said vertical direction (Y) and said horizontal direction (X) to define a portion (21) of said feed table (5); said portion (21) being substantially equal to the width (L) of said panels (4) defining said stacks (3a, 3b).

5. A device (1) as claimed in any one of the foregoing Claims, wherein said at least one push member (9) is mounted on a carriage (11), which also comprises at least one gripper (16) for feeding the complete packs (6) of panels (4) to the cutting system.

6. A device (1) as claimed in any one of the foregoing Claims, wherein provision is also made for an electronic central control unit (18) and at least one sensor (15) , which regulate and control all the operations performed by said elevator loading platform (2), by said at least one push member (9), and by said at least one gate (19); and wherein said electronic central control unit (14) also regulates the position of said means (13, 14) for selecting said heights (Hₐ, H_{b}, H) within said at least one push member (9).

7. A method of feeding panels to a cutting system, when the panels are of substantially equal thickness and substantially undeformed; the method being characterized by comprising, in combination, the steps of:
(a) loading a first stack of panels of a predetermined height onto an elevator platform;
(b) determining the maximum height of a complete pack that can be cut by the cutting system, and, on the basis of the thickness of the panels forming said stack, determining the number of said panels defining said complete pack of said height;
(c) raising said elevator platform to such a height that the bottom surface of said complete pack to be removed is on a level with a feed table for supplying said cutting system;
(d) pushing said complete pack onto said feed table by means of at least one push member, the thrust point of which is aligned with said feed table;
(e) repeating steps (c) and (d) as long as the complete packs pushed onto the feed table comprise the number of panels determined in step (b);
(f) determining, by appropriate means, the height of a first incomplete pack, and pushing said first incomplete pack onto the feed table;
(g) loading a second stack onto said elevator platform;
(h) determining, by appropriate means, the height of a second incomplete pack equal to the difference between the height of the complete pack, as determined in step (b), and the height of the first incomplete pack, as determined in step (f);
(i) raising said elevator platform so that the top surface of the first incomplete pack fed onto the feed table in step (f) is aligned with the bottom surface of the second incomplete pack as determined in step (h);
(l) raising said at least one push member to such a height that the thrust point of said at least one push member is substantially aligned with the top surface of the first incomplete pack and with the bottom surface of the second incomplete pack;
(m) pushing said second incomplete pack onto the first incomplete pack by means of said at least one push member; and
(n) feeding the complete pack so formed to the cutting system by means of gripping means for gripping the pack.

8. A method as claimed in Claim 7, wherein the lift height of said elevator platform (2) and of said at least one push member (9) is slightly greater than that referred to in steps (i) and (1) of the Claim.

9. A method of feeding panels to a cutting system, when the panels are of different thickness and/or deformed; the method being characterized by comprising, in combination, the steps of:
(a) loading a first stack of panels of a predetermined height onto an elevator platform;
(b) determining the maximum height of a complete pack that can be cut by the cutting system, and, on the basis of the thickness of the panels forming said stack, determining the number of said panels defining said complete pack of said height;
(c) raising said elevator platform to a height slightly greater than that of a feed table for supplying the cutting system, so that the bottom surface of said complete pack to be removed is slightly higher than the feed table;
(d) pushing said complete pack onto said feed table by means of at least one push member, which is rested on top of the stack, and in which appropriate means have selected and defined a height equal to that of the complete pack;
(e) repeating steps (c) and (d) as long as the complete packs pushed onto the feed table comprise the number of panels determined in step (b);
(f) determining, by appropriate means, the height of a first incomplete pack; selecting and defining, by appropriate means, a height equal to that of said first incomplete pack within said at least one push member; and pushing said first incomplete pack onto the feed table by means of said at least one push member;
(g) loading a second stack onto said elevator platform;
(h) determining, by appropriate means, the height of a second incomplete pack equal to the difference between the height of the complete pack, as determined in step (b), and the height of the first incomplete pack, as determined in step (f);
(i) raising said elevator platform so that the bottom surface of the second incomplete pack is slightly higher than the top surface of the first incomplete pack already transferred onto the feed table in step (f);
(l) selecting and defining, by appropriate means, a height equal to that of said second incomplete pack within said at least one push member;
(m) pushing said second incomplete pack onto the first incomplete pack by means of said at least one push member; and
(n) feeding the complete pack so formed to the cutting system by means of gripping means for gripping the pack.

10. A method as claimed in any one of Claims 7 to 9, wherein provision is made for a further step of selecting and defining a portion of the feed table; said portion being substantially equal to the width of the panels defining the packs.
